Europäisches Patentamt

(19) European Patent Office

Office européen des brevets

(11) Publication number: **0 135 260**
**A1**

(12) **EUROPEAN PATENT APPLICATION**

(21) Application number: 84304120.3

(22) Date of filing: 19.06.84

(51) Int. Cl.⁴: **F 16 J 15/32**

(30) Priority: 05.07.83 GB 8318149

(43) Date of publication of application:
27.03.85 Bulletin 85/13

(84) Designated Contracting States:
BE DE GB

(71) Applicant: FERNDALE DEVELOPMENTS (GANLLWYD) LIMITED
Ganllwyd nr. Dolgelly Merionethshire(GB)

(72) Inventor: Waring, Arthur Frank
Peters Court Plymouth Drive
Barnt Green Birmingham B45 8JB(GB)

(74) Representative: Cuddon, George Desmond et al,
Marks & Clerk Alpha Tower Suffolk Street Queensway
Birmingham B1 1TT(GB)

(54) Annular elastomeric sealing devices.

(57) A sealing device comprises an annular elastomeric element (10) having a circumferential portion (11) rendered rigid by a metal inclusion (12), and a relatively flexible portion (13) for engagement with a shaft (18). A plurality of resilient webs (16) are integral with the portions (11, 13) and extend therebetween to bias the flexible portion (13) into sealing contact with the shaft (18).

FIG.2.

## ANNULAR ELASTOMERIC SEALING DEVICES

This invention relates to annular elastomeric sealing devices.

It is known to provide annular elastomeric sealing devices which have a circumferential projection, or lip, which in use sealingly engages a shaft extending through the device, or a bore in which the device is located. Such elements are commonly arranged so that a pressure difference across the element urges the lip into sealing contact with the shaft or bore. It is also known to bias the aforesaid lip radially by means of a garter spring which engages a part of the element adjacent the lip. The purposes of the garter spring are to take up wear on the sealing device and to provide an initial bias which ensures that the pressure difference referred to above can subsequently act to maintain sealing engagement.

It is a disadvantage of garter springs that their method of assembly requires relative twisting between the ends of a helically wound spring, in a sense to tend to unwind the spring, mating of these ends, and releasing the ends to allow one end to wind into the other end. This assembly is time consuming and therefore expensive. Additionally, the mean diameter of the spring turns must be much greater than the diameter of the wire from which the spring is made, and the circumferential length of the spring is very large in relation to its wire diameter. The effect is thus that garter springs of the foregoing type have a low spring rate and cannot exert a high radial force on the sealing element. Moreover, the method of assembly of garter springs has the effect that it may not be possible to exercise precise control over the force which they exert on the lip of the sealing element. Garter springs cannot conveniently be used in elastomeric sealing devices of very small diameters, or in which the lips are required to be biased radially outwards, or in face seals.

It is an object of the present invention to provide an annular elastomeric sealing device in which the foregoing problems are overcome.

Sealing devices of the type referred to above commonly have a relatively rigid portion and a more flexible portion which includes the lip. The rigid portion typically has a reinforcing metal ring moulded therein. In use the rigid portion is usually mounted so as to engage a relatively stationary part of an arrangement to be sealed, and the lip engages a movable bore or shaft.

According to the invention an annular elastomeric sealing device comprises an annular elastomeric element having a relatively flexible circumferential portion engageable, in use, with a bearing surface, a relatively rigid circumferential portion spaced from said flexible portion, and a plurality of resiliently deformable webs integrally moulded with said rigid and said flexible portions and extending therebetween.

Embodiments of the invention will now be described by way of example only and with reference to the accompanying drawings in which:-

Figure 1 is an end view of an elastomeric sealing device,

Figure 2 is a section on line 2 - 2 in Figure 1,

Figures 3, 5, 7, 9 and 11 are views, corresponding to Figure 1, of alternative forms of sealing element,

Figures 4, 6, 8, 10 and 12 are sections on the correspondingly numbered lines in Figures 3 to 11, and

Figure 13 is a section through a sealing element having an outwardly directed lip.

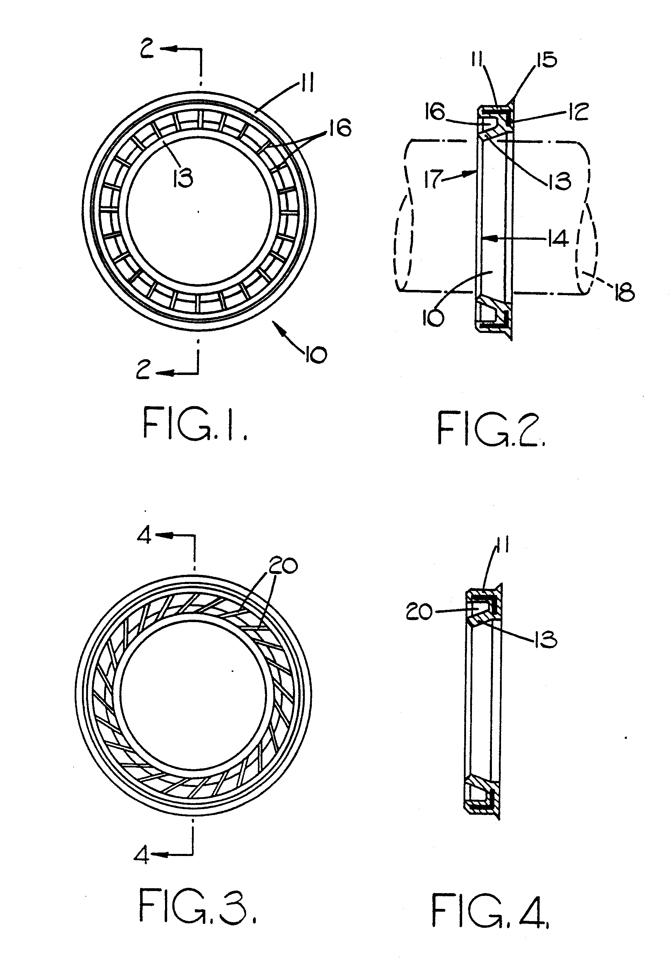

As shown in Figures 1 and 2 an elastomeric annular sealing element 10 has a radially outer portion 11 which is engageable with a cylindrical bore and which has an annular metal insert 12 moulded therein. Integrally moulded with the portion 11 is a radially inner flexible portion 13 which defines a lip 14 engageable with a cylindrical bearing surface 18 on a shaft which passes, in use, through the element 10. The portion 11 is provided with a radially outwardly projecting lip 15 which prevents the element 10 from being inserted into its associated bore the wrong way round. Between the portions 11, 13 are a plurality of integrally moulded webs 16 which lie in planes which are radial to the axis of the element 10. Preferably the webs 16 do not extend up to the front face 17 of the element 10.

In an unstressed condition of the sealing element 10 the webs 16 maintain an inner diameter of the lip 14 such that the latter is an interference fit on an associated shaft. The webs 16 nevertheless permit the portion 13 to be deformed radially outwards to accomodate the shaft. The webs 16 have a thickness which is dependent on the anticipated radial load and are circumferentially spaced so as to provide, in a stressed condition of the element 10, a substantially evenly distributed radially inward bias on the portion 13, so that the lip 14 as an even engagement with the shaft around the whole of the latter's circumference. If a radial load is applied to the element 10 over a part of its circumference only, the webs 16 at that part apply a plurality of local forces which increase the axial length of the contact with the shaft at zones of the lip 14 which lie under the affected ones of the webs 16. Such a result is advantageous, in that for sealing elements of this type to operate effectively there must be some leakage past the lip 14, to provide lubrication between the lip and the shaft. Local widening of the contact area between the shaft and the lip allows this leakage to continue in zones of the lip 14 which lie between the webs 16 to which additional load is applied.

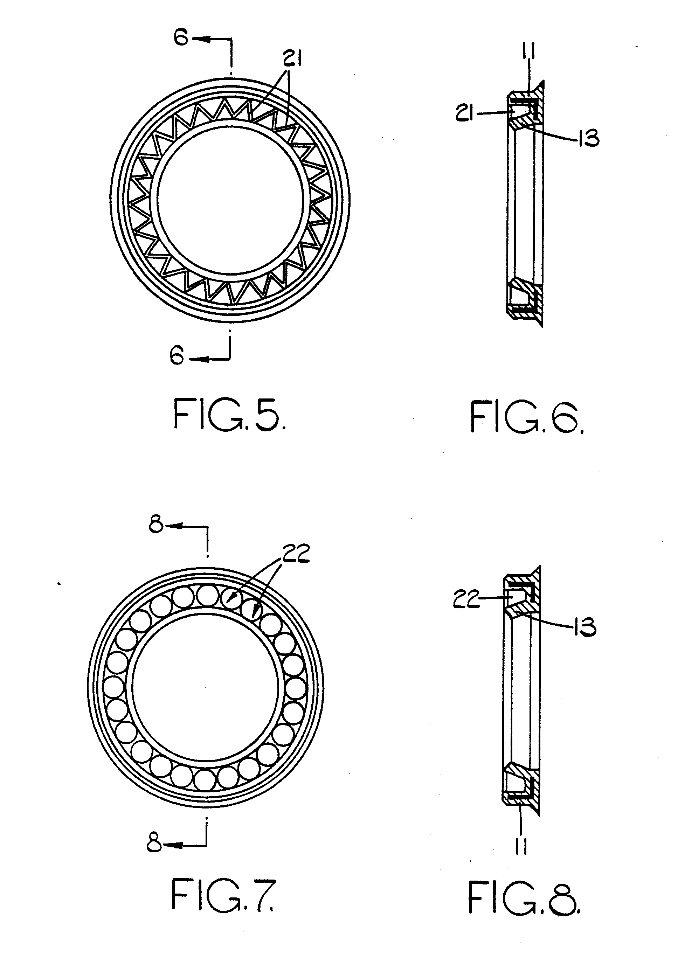

The alternative embodiment shown in Figures 3 and 4 is generally similar to that shown in Figures 1 and 2, but in this case the webs 20 are inclined to the radial directions. In such an arrangement the webs 20 transmit lower forces to the portion 13 in response to local deformation of the portion 11.

In the arrangement shown in Figures 5 and 6 alternate ones of the webs 21 are inclined in opposite directions to the radial. This arrangement provides increased rigidity and, by effectively diverting forces from local loads on the portion 11, and increases in axial length of contact between the shaft and zones of the lip 14, in response to the load on portion 11, are less pronounced than in the embodiment shown in Figures 1 and 2.

In the embodiment of Figures 7 and 8 the webs 22 have generally cylindrical walls which are integral at their radially inner and radially outer zones with the portions 11, 13.

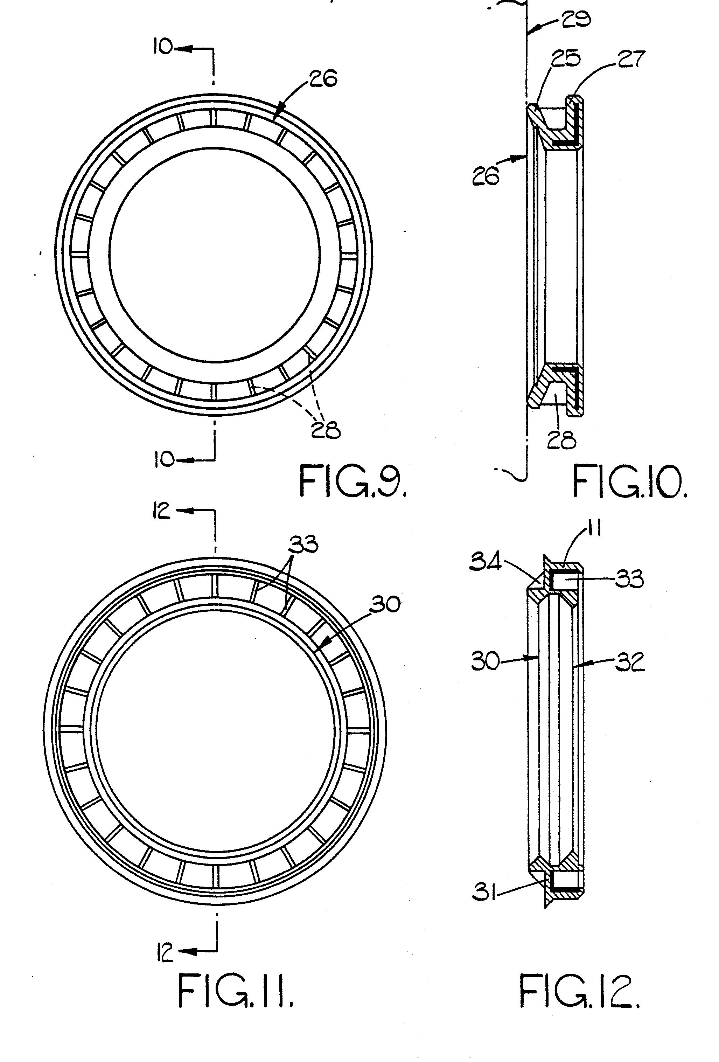

Figures 9 and 10 show a face seal having a portion 25 which defines an axially directed lip 26 which engages a plane bearing surface 29, the portion 25 being axially spaced from a reinforced portion 27. A plurality of radially-extending webs 28 are integral with the portions 25, 27 and support the portion 26 against deformation in the direction of the portion 27. This embodiment illustrates how integrally moulded webs may be used to support the lip portion of a face seal, this support not being readily achievable with garter springs. This embodiment may incorporate any of the web configurations previously described.

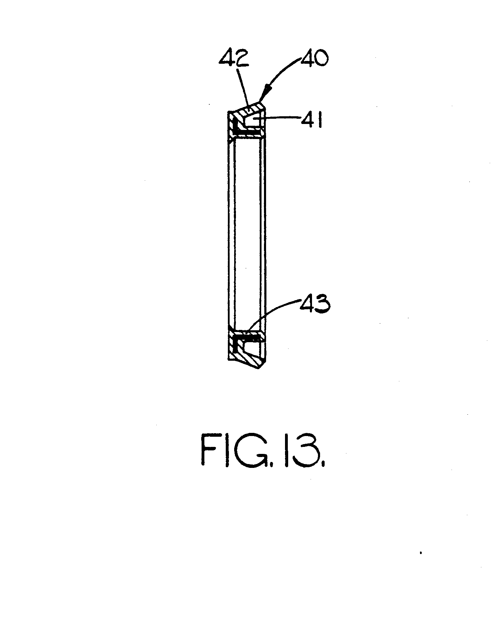

The embodiment shown in Figures 11 and 12 is generally similar to that shown in Figures 1 and 2, but includes an additional wiper lip 30. In conventional annular sealing elements no support is given to the wiper lip, reliance being placed on the wiper lip being at a smaller distance from the relatively rigid, reinforced portion 31 than is the main shaft sealing lip 32. In the present embodiment, however, in addition to radial web supports 33 for the lip 32, there are additionally provided a plurality of radial webs 34 between the reinforced portion 31 and the wiper lip 30.

Figure 13 shows a sealing element having an outwardly directed sealing lip 40. A plurality of radial webs 41, generally similar to the webs 16 in Figures 1 and 2 extend between a relatively flexible outer portion 42 which defines the lip 40, and a more rigid, reinforced inner portion 43.

The embodiments of Figures 11 and 12 or Figure 13 may also incorporate any of the web configurations previously described.

CLAIMS

1. An annular elastomeric sealing device comprising an annular elastomeric element having a relatively flexible circumferential portion (13 or 25 or 30, or 32 or 40) engageable with a bearing surface (18 or 29), a relatively rigid circumferential portion (11 or 27 or 43), and resilient means for biasing said flexible portion into engagement with said bearing surface, characterised in that said resilient means comprises a plurality of resiliently deformable webs (16 or 20 or 21 or 22 or 28 or 33 or 34 or 41) integrally moulded with said rigid and flexible portions and extending therebetween.

2. A sealing device as claimed in claim 1 in which said flexible portion (25) is axially spaced from said rigid portion (27) and includes an axially directed lip (26) for engagement with a plane bearing surface (29).

3. A sealing device as claimed in claim 1 or claim 2 in which said webs (16 or 28 or 33 or 34) extend radially of said element.

4. A sealing device as claimed in claim 1 or claim 2 in which said webs (20 or 21) are inclined to radial directions from the axis of said element.

5. A sealing device as claimed in claim 4 in which said webs (21) are inclined alternate opposite directions from said radial directions.

6. A sealing device as claimed in claim 1 or claim 2 in which said webs (22) comprise a plurality of cylindrical walls.

7. A sealing device as claimed in claim 1 which includes a second relatively flexible circumferential portion (30) and a plurality of further resiliently deformable webs (34) integral with said rigid portion (11) and said second flexible portion (30) and extending therebetween.

8. A sealing device as claimed in claim 1 in which said flexible portion (42) has a radially outwardly directed lip (40) for engagement with a cylindrical bore.

FIG.1.

FIG.2.

FIG.3.

FIG.4,

2/4

0135260

FIG.5.

FIG.6.

FIG.7.

FIG.8.

0135260

FIG.9.

FIG.10.

FIG.11.

FIG.12.

FIG. 13.

European Patent
Office

**EUROPEAN SEARCH REPORT**

0135260

Application number

EP 84 30 4120

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 515 769 (HUTCHINSON) <br><br> * Claims 1-4; figures 3-5 * <br><br> --- | 1,3,4, 6,7 | F 16 J 15/32 |
| A | GB-A- 769 585 (G.C. PRESSWORK CO. LTD.) <br><br> --- | | |
| A | GB-A- 727 814 (G.C. PRESSWORK CO. LTD.) <br><br> ----- | | |

| | | | TECHNICAL FIELDS SEARCHED (Int. Cl. ³) |
|---|---|---|---|
| | | | F 16 J 15/32 |

The present search report has been drawn up for all claims

| Place of search | Date of completion of the search | Examiner |
|---|---|---|
| BERLIN | 15-09-1984 | HOFFMANN M.P. |